(19) Europäisches Patentamt
European Patent Office
Office européen des brevets

(11) EP 3 021 565 A1

(12) EUROPEAN PATENT APPLICATION
published in accordance with Art. 153(4) EPC

(43) Date of publication:
18.05.2016 Bulletin 2016/20

(51) Int Cl.:
H04M 11/00 (2006.01)    H04Q 9/00 (2006.01)

(21) Application number: 14823776.1

(22) Date of filing: 24.04.2014

(86) International application number:
PCT/JP2014/061526

(87) International publication number:
WO 2015/004971 (15.01.2015 Gazette 2015/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.07.2013 JP 2013145118

(71) Applicant: Aplix IP Holdings Corporation
Tokyo 169-0051 (JP)

(72) Inventor: KORIYAMA, Ryu
Tokyo 1690051 (JP)

(74) Representative: Cohausz & Florack
Patent- & Rechtsanwälte
Partnerschaftsgesellschaft mbB
Bleichstraße 14
40211 Düsseldorf (DE)

(54) TERMINAL APPARATUS, REMOTE-CONTROL SYSTEM, AND METHOD FOR DETERMINING WHAT TO CONTROL REMOTELY IN SAID SYSTEM

(57) To accurately determine the nearest electronic device in establishing a pairing with an electronic device to be a target for remote control.

A terminal device includes a received signal strength acquiring unit, a device selection processing unit, and a connecting unit. The received signal strength acquiring unit receives a signal transmitted from a plurality of electronic devices and acquires the electric field strength of the received signal. The device selection processing unit selects an electronic device to be a target for connection from the plurality of electronic devices in accordance with a normalized electric field strength that is a value obtained by normalizing the electric field strength of the received signal using a parameter corresponding to and unique to an electronic device that transmits the received signal. The connecting unit establishes a connection with the electronic device selected at the device selection processing unit.

FIG. 2

EP 3 021 565 A1

**Description**

Technical Field

The present invention relates to a remote control system, and more specifically to a terminal device that selects an electronic device to be a control target from a plurality of electronic devices, a remote control system, and a remote control target determination method therefor.

Background Art

In remotely controlling electronic devices, general-purpose terminal devices, such as portable terminals, are increasingly used, instead of dedicated remote controllers. In this case, it is necessary to select an electronic device to be a control target from a plurality of electronic devices in a home for establishing an association (in the following, referred to as a pairing). Heretofore, in order to find the nearest electronic device, there has been proposed a technique, for example, to use information about an error rate or a received electric field strength in receiving a message transmitted from an electronic device (e.g. see Patent Literature 1). Moreover, there has been proposed a technique to detect a device whose received electric field strength value is the maximum as the nearest device in receiving a confirmation frame from an electric device(e.g. see Patent Literature 2).

Citation List

Patent Literature

Patent Literature 1: Japanese Unexamined Patent Application Publication No. 2008-205780
Patent Literature 2: Japanese Unexamined Patent Application Publication No. 2008-131532

Summary of Invention

Technical Problem

In the previously existing techniques described above, an electronic device whose electric field strength is the maximum in reception is selected for pairing. However, because the electric field strength is affected by states or characteristics of electronic devices, for example, an electronic device having the strongest electric field strength is not always present in the nearest range. Even though electronic devices have the same built-in transmitter, the strengths of radio waves to be transmitted are generally different from each other depending on the characteristics of the housings of the electronic devices, for example.

The present invention is made in view of such circumstances. It is an object of the present invention to accurately determine the nearest electronic device in establishing a pairing with an electronic device to be a target for remote control.

Solution to Problem

The present invention is made to address the foregoing problems. A first aspect is a terminal device and a remote control system provided with the terminal device. The terminal device includes: a received signal strength acquiring unit that receives a signal transmitted from a plurality of electronic devices and acquires an electric field strength of the received signal; a device selection processing unit that selects an electronic device to be a target for connection from the plurality of electronic devices in accordance with a normalized electric field strength that is a value obtained by normalizing the electric field strength of the received signal using a parameter corresponding to and unique to an electronic device that transmits the received signal; and a connecting unit that establishes a connection with the electronic device selected at the device selection processing unit. Thus, an effect is achieved in which an electronic device to be a target for connection is selected in accordance with a normalized electric field strength and a connection is established from a terminal.

Moreover, a second aspect of the present invention is a remote control target determination method including: a received signal strength acquiring step of receiving a signal transmitted from a plurality of electronic devices to acquire an electric field strength of the received signal; a device selection processing step of selecting an electronic device to be a target for connection from the plurality of electronic devices in accordance with a normalized electric field strength that is a value obtained by normalizing the electric field strength of the received signal using a parameter corresponding to and unique to an electronic device that transmits the received signal; and a connecting step of establishing a connection with the electronic device selected in the device selection processing step. Thus, an effect is achieved in which an electronic device to be a target for connection is selected in accordance with a normalized electric field strength for establishing a connection.

Advantageous Effects of Invention

According to an aspect of the present invention, it is possible to exert an excellent effect that can accurately determine the nearest electronic device in establishing a pairing with an electronic device to be a target for remote control.

Brief Description of Drawings

[Fig. 1] Fig. 1 is a diagram illustrating an exemplary configuration of a remote control system according to an embodiment of the present invention.
[Fig. 2] Fig. 2 is a diagram illustrating an exemplary functional configuration of a remote control system according to a first embodiment of the present invention.
[Fig. 3] Fig. 3 is a diagram illustrating examples of items stored in a reference strength storage unit 10 according to an embodiment of the present invention.
[Fig. 4] Fig. 4 is a diagram illustrating examples of received signal strength models assumed in an embodiment of the present invention.
[Fig. 5] Fig. 5 is a flow chart illustrating an example of process procedures of a terminal device 200 according to the first embodiment of the present invention.
[Fig. 6] Fig. 6 is a diagram illustrating an example of a communication packet format between an electronic device 100 and the terminal device 200 according to an embodiment of the present invention.
[Fig. 7] Fig. 7 is a sequence diagram illustrating an example of a process flow of the remote control system according to the first embodiment of the present invention.
[Fig. 8] Fig. 8 is a diagram illustrating an exemplary functional configuration of a remote control system according to a second embodiment of the present invention.
[Fig. 9] Fig. 9 is a flow chart illustrating an example of process procedures of a terminal device 200 according to the second embodiment of the present invention.
[Fig. 10] Fig. 10 is a sequence diagram illustrating an example of a process flow of the remote control system according to the second embodiment of the present invention.
[Fig. 11] Fig. 11 is a diagram illustrating an exemplary functional configuration of a remote control system according to a third embodiment of the present invention.
[Fig. 12] Fig. 12 is a sequence diagram illustrating an example of a process flow of the remote control system according to the third embodiment of the present invention.
[Fig. 13] Fig. 13 is a diagram illustrating an exemplary appearance of a weight scale as an example of the electronic device 100 according to an embodiment of the present invention.
[Fig. 14] Fig. 14 is a diagram illustrating examples of stored items according to an exemplary modification of the reference strength storage unit 10 according to an embodiment of the present invention.
[Fig. 15] Fig. 15 is a diagram illustrating an example of display to select an electronic device on the terminal device 200 according to an embodiment of the present invention.

Description of Embodiments

In the following, embodiments to achieve the present invention will be described.

1. First Embodiment

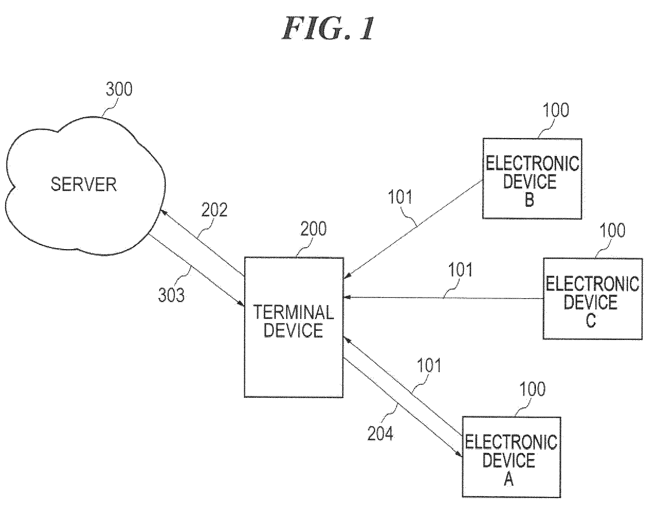

Fig. 1 is a diagram illustrating an exemplary configuration of a remote control system according to an embodiment of the present invention. The remote control system includes a plurality of electronic devices 100, a terminal device 200, and a server 300.
The electronic device 100 is a device to be a control target in the remote control system. The electronic device 100 includes, for example, audiovisual devices, such as an image-reproducing-and-recording device, and home electrical appliances, such as a weight scale and a sphygmomanometer. Here, it is assumed that the plurality of electronic devices 100 include circuits for wireless communication and communicate with the terminal device 200. In the following, an example will be described in which "Bluetooth (registered trademark) Low Energy" (in the following, abbreviated to "BLE") optimized for ultra-low power consumption is applied as the standard for such wireless communications.

The terminal device 200 is a device that functions as a controller for the electronic device 100 in the remote control system. The terminal device 200 includes, for example, a portable terminal, a tablet personal computer, and other devices. The terminal device 200 includes a circuit for wireless communications similarly to the electronic device 100, and performs wireless communications necessary for remote control. Moreover, the terminal device 200 includes software programs for remote control over the electronic device 100, and executes these programs as necessary.

The server 300 is a server that provides information or processes necessary for the terminal device 200. The server 300 is connected to the terminal device 200 in a wireless or wired manner, and provides information or processes in response to a request from the terminal device 200.

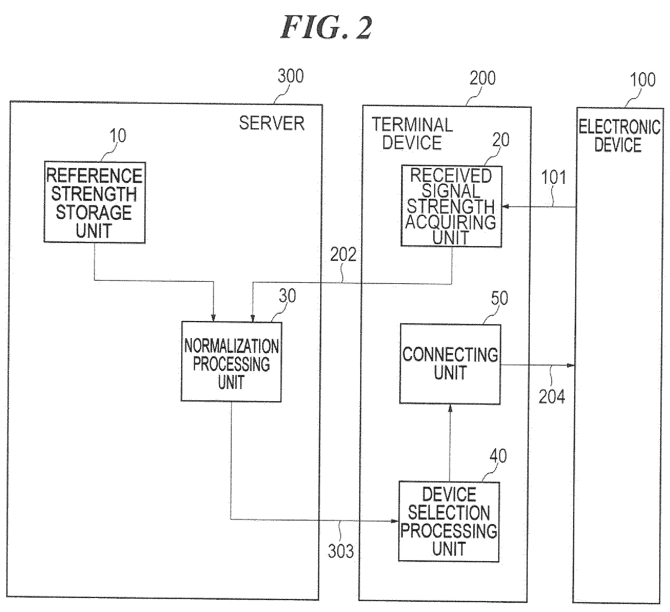

Fig. 2 is a diagram illustrating an exemplary functional configuration of the remote control system according to a first embodiment of the present invention. Here, the remote control system includes a reference strength storage unit 10, a received signal strength acquiring unit 20, a normalization processing unit 30, a device selection processing unit 40, and a connecting unit 50. In the first embodiment, it is supposed that the server 300 has the reference strength storage unit 10 and the normalization processing unit 30, and the terminal device 200 has the received signal strength acquiring unit 20, the device selection processing unit 40, and the connecting unit 50.

The reference strength storage unit 10 is a unit that stores reference strengths as parameters corresponding to and unique to the plurality of electronic devices 100. The reference strength is a parameter that measures the electric field strength of signal received at the terminal device 200 in advance for each of models in disposing the plurality of electronic devices 100 in predetermined distances and enables reference to the electric field strengths for normalization.

The received signal strength acquiring unit 20 is a unit that acquires the electric field strengths of the signals transmitted from the plurality of electronic devices 100. Under the BLE environment, each of the plurality of electronic devices 100 transmits a signal 101 at a given strength to notify the terminal device 200 of the presence. The received signal strength acquiring unit 20 receives the signals 101 from the plurality of electronic devices 100, and measures the electric field strengths of the signals 101 as received signal strength indicators (RSSIs). Moreover, the signal 101 from the electronic device 100 includes an identifier that indicates the model of the electronic device. A reference strength necessary for normalization is determined in accordance with this identifier.

The normalization processing unit 30 is a unit that normalizes a received signal strength 202 acquired at the received signal strength acquiring unit 20 based on the reference strength stored in the reference strength storage unit 10. The details of a normalization process will be described later.

The device selection processing unit 40 is a unit that selects the electronic device 100 to be a target for pairing based on a received signal strength 303 normalized at the normalization processing unit 30. Selecting the electronic device 100 whose normalized received signal strength 303 is the maximum, for example, is considered as the criterion for selecting the electronic device 100 to be a target for pairing.

The connecting unit 50 is a unit that sends a connection request signal 204 for establishing a pairing with the electronic device 100 selected at the device selection processing unit 40.

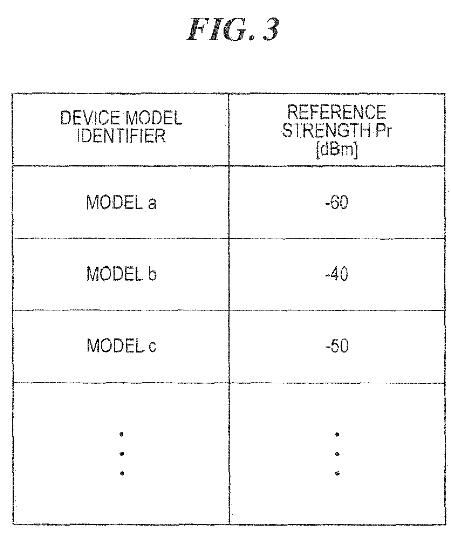

Fig. 3 is a diagram illustrating examples of items stored in the reference strength storage unit 10 according to the first embodiment of the present invention. The reference strength storage unit 10 stores a reference strength Pr in association with a device model identifier.

The device model identifier is an identifier for each of the models of the electronic devices 100. As attention is focused on the fact that the strengths of transmitted radio waves are different depending on the individual models, the device model identifier is used as an index to store the reference strength Pr, which is a unique parameter for each model. The signal 101 from the electronic device 100 includes the device model identifier. The reference strength Pr necessary for normalization is determined in accordance with the device model identifier.

The reference strength Pr is a parameter for normalizing the received signal strength. Here, it is supposed that the electronic device 100 is disposed at a location a predetermined distance apart from the terminal device 200. The electric field strength is measured in advance in receiving a signal transmitted from the electronic device 100 at the terminal device 200, and then the electric field strength is stored as the reference strength Pr. In this example, "-60 dBm" for model a, "-40 dBm" for model b, and "-50 dBm" for model c are stored respectively as the reference strengths Pr. It is noted that the term "dBm" is a unit indicating signal levels, expressing logarithmically a ratio to one milliwatt (mW) by the logarithm.

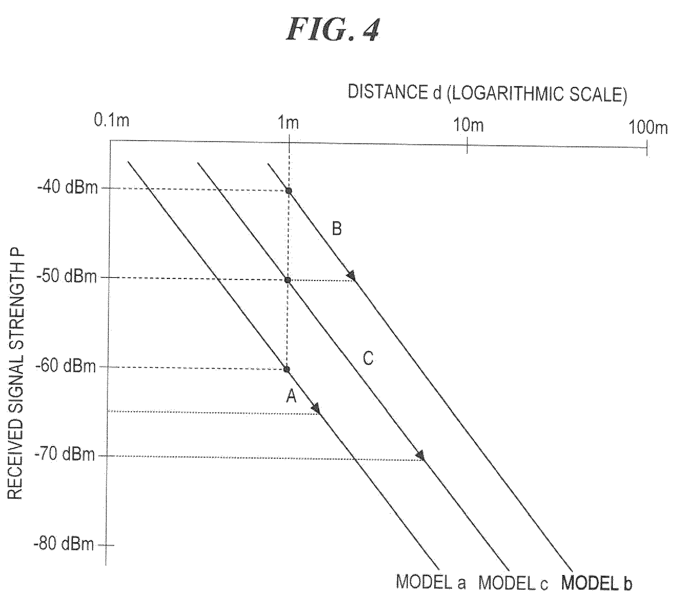

Fig. 4 is a diagram illustrating examples of received signal strength models assumed in the embodiment of the present invention. It is known that an attenuation PL (dB) of radio waves from the BLE electronic device 100 with respect to a distance d (meters) is approximated by an equation below.

$$PL = 40 + 25 \log(d)$$

By this equation, the received signal strength P at the terminal device 200 can be approximated by an equation below. Here, the reference strength Pr is the received signal strength at the terminal device 200 in the case where the distance d to the electronic device 100 is one meter.

$$P = Pr - 25 \log(d)$$

Therefore, the value obtained by subtracting the reference strength Pr from the received signal strength P, which is an actually measured value at the terminal device 200, is found as a normalized received signal strength Pn as described below, and the normalized received signal strength Pn is compared among the electronic devices 100. Thus, the distance from the electronic device 100 to the terminal device 200 can be compared.

$$Pn = P - Pr = -25 \log(d)$$

In Fig. 4, each straight line expresses the damping property of the received signal strength P to the distance d for each of the models of the electronic device 100. As described above, the received signal strength P at a location at which the distance d is one meter is the reference strength Pr corresponding to each of the electronic devices 100. In the case where the distance d is expressed by a logarithmic scale, the damping properties of the individual models are expressed by straight lines having the same slope, showing that the logarithmic relative value of the distance d and the relative value of the received signal strength P are in the same linear relationship in any model. Therefore, as the equation above, the reference strength Pr is subtracted from the actually measured received signal strength P to obtain a normalized value, and then the size relationship is checked among the obtained normalized values. Thus, the relative length relationship of the distance d can be determined, and the nearest electronic device 100 can be identified.

Here, it is supposed that the received signal strength P at the terminal device 200 is "-65 dBm", "-50 dBm", and "-'70 dBm" for electronic devices A, B, and C, respectively. The normalized received signal strengths Pns are expressed as below.

$$Pn \text{ (the electronic device A)} = (-65 \text{ dBm}) - (-60 \text{ dBm})$$

$$= -5 \text{ dBm}$$

$$Pn \text{ (the electronic device B)} = (-50 \text{ dBm}) - (-40 \text{ dBm})$$

$$= -10 \text{ dBm}$$

$$Pn \text{ (the electronic device C)} = (-70 \text{ dBm}) - (-50 \text{ dBm})$$

$$= -20 \text{ dBm}$$

In this case, the electronic device A is at the nearest location, the electronic device B is at the second nearest location, and the electronic device C is at the farthest location.

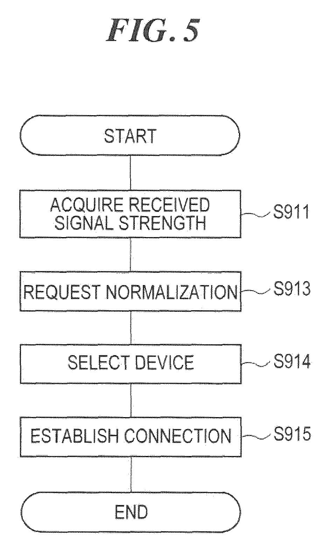

Fig. 5 is a flow chart illustrating an example of process procedures of the terminal device 200 according to the first embodiment of the present invention. The terminal device 200 receives signals from the plurality of electronic devices 100, and measures the received signal strengths P of the signals (Step S911). The terminal device 200 then requests the server 300 to normalize the measured received signal strengths P (Step S913). Thus, the server 300 normalizes the received signal strengths P, and supplies the normalized received signal strengths Pn to the terminal device 200.

The terminal device 200 compares the normalized received signal strengths Pn among the plurality of electronic devices 100, and selects the nearest electronic device 100 (Step S914). The terminal device 200 establishes a connection for pairing with the selected electronic device 100 (Step S915).

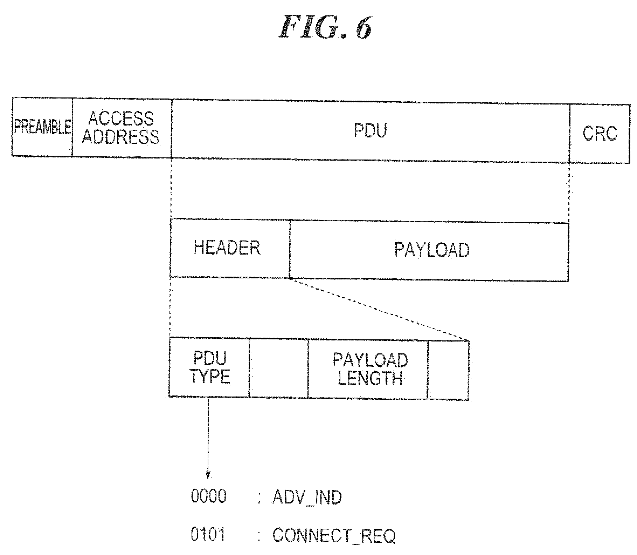

Fig. 6 is a diagram illustrating an example of a communication packet format between the electronic device 100 and the terminal device 200 according to the embodiment of the present invention. In BLE, prior to establishing a pairing, the electronic device 100 communicates with the terminal device 200 in the link layer as described below.

The packet format of the link layer has a one-octet preamble, a four-octet access address, a two to 39-octet Protocol Data Unit (PDU), and a three-octet Cyclic Redundancy Check (CRC).

The preamble is a signal added to the beginning of a packet for frequency synchronization, symbol timing estimation, and AGC adjustment on the receiving side. The access address is a physical address used as a correlation code for tuning to a physical channel. The CRC is a cyclic redundancy check code for detecting an error that occurs in the process of communications.

The PDU is a protocol data unit transmitted in the link layer. For information transmission from the electronic device 100 and a connection request from the terminal device 200, which are performed prior to establishing a connection and a pairing between the terminal device 200 and the electronic device 100, an advertising channel PDU is used. The advertising channel PDU is separated into a header and a payload. In the header, a PDU type and a payload length are defined. In the case where a four-bit PDU type indicates "0000", this means that the PDU is a PDU (ADV_IND) that presents information necessary for advertising. This ADV_IND includes information, such as a name of an electronic device and a service type to be offered. The electronic device 100 broadcasts ADV_IND at predetermined intervals, and notifies that the electronic device 100 waits for connection from the terminal device 200 present around the electronic device 100.

In the case where the PDU type indicates "0101", this means that the PDU is a PDU (CONNECT_REQ) that requests a connection. After receiving ADV_IND, the terminal device 200 selects an electronic device 100 to be paired, and sends CONNECT_REQ to the selected electronic device 100 to request a connection.

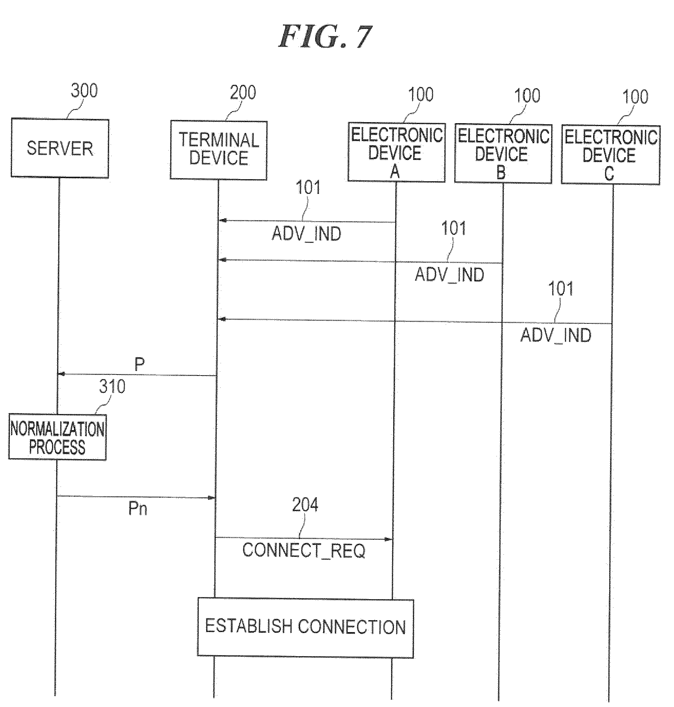

Fig. 7 is a sequence diagram illustrating an example of a process flow of the remote control system according to the first embodiment of the present invention.

The electronic devices A, B, and C (100) broadcast the signal 101 (ADV_IND) at predetermined intervals, and thereby notify that the electronic devices A, B, and C (100) wait for connection from the terminal device 200. The terminal device 200 measures the received signal strengths P of the signals 101, and requests the server 300 to normalize the measured received signal strengths P. Thus, the server 300 performs the normalization process 310 for the received signal strengths P. The server 300 then supplies the normalized received signal strengths Pn to the terminal device 200.

The terminal device 200 selects the electronic device A whose normalized received signal strength Pn is the maximum as the electronic device 100 present at the nearest location, and sends the connection request signal 204 (CONNECT_REQ). Thus, a connection is established between the terminal device 200 and the electronic device A to establish a pairing.

As described above, according to the first embodiment of the present invention, the received signal strength of the signal, which is transmitted from the electronic device 100 and received at the terminal device 200, is normalized at the server 300. Thus, the electronic device 100 present at the nearest location can be accurately grasped for establishing a pairing.

2. Second Embodiment

In the foregoing first embodiment, the normalization process is performed at the server 300. However, the normalization process may be performed at the terminal device 200. In the following, an example in which the normalization process is performed at the terminal device 200 will be described as a second embodiment.

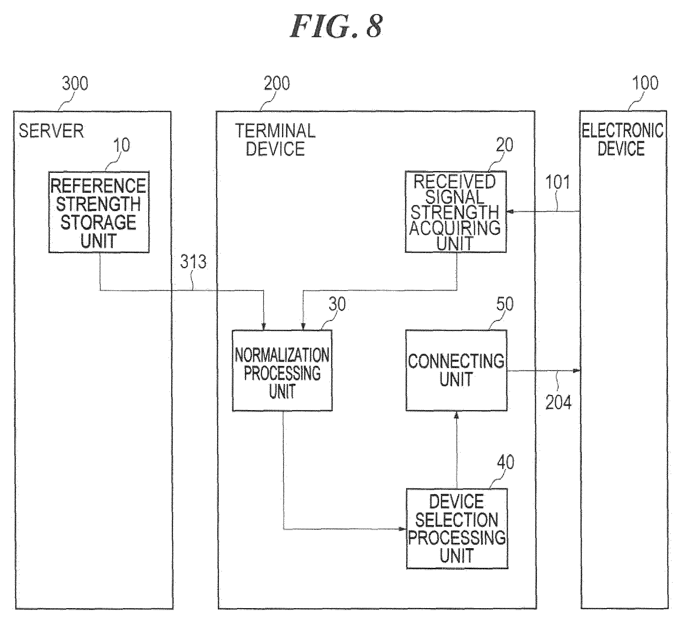

Fig. 8 is a diagram illustrating an exemplary functional configuration of a remote control system according to the second embodiment of the present invention. It is noted that because the overall structure of the remote control system is similar to the remote control system according to the foregoing first embodiment, the description is omitted.

In the second embodiment, the terminal device 200 performs the normalization process, which is performed at the server 300 in the foregoing first embodiment. To this end, the terminal device 200 includes the functions of the normalization processing unit 30. Therefore, in measuring the received signal strength P at the received signal strength acquiring unit 20, the terminal device 200 acquires a corresponding reference strength Pr from the server 300 (313), and performs the normalization process at the normalization processing unit 30. The details of the normalization process are similar to the process in the foregoing first embodiment; a value obtained by subtracting the reference strength Pr from the received signal strength P is found as the normalized received signal strength Pn. Processes after the normalization process are also similar to the processes in the foregoing first embodiment.

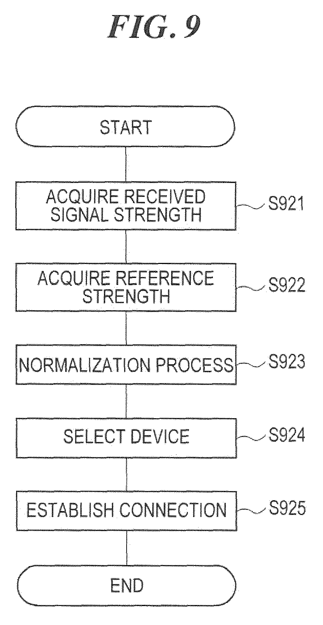

Fig. 9 is a flow chart illustrating an example of process procedures of the terminal device 200 according to the second embodiment of the present invention. The terminal device 200 receives signals from the plurality of electronic devices 100, and measures the received signal strengths P of the signals (Step S921). The terminal device 200 then acquires, from the server 300, the reference strengths Pr corresponding to the electronic devices 100 that transmit the signals (Step S922). Upon acquiring the reference strengths Pr, the terminal device 200 performs the normalization process for the measured received signal strengths P (Step S923). Thus, the normalized received signal strengths Pn are obtained.

The terminal device 200 compares the normalized received signal strengths Pn among the plurality of electronic devices 100, and selects the nearest electronic device 100 (Step S924). The terminal device 200 establishes a connection for pairing with the selected electronic device 100 (Step S925).

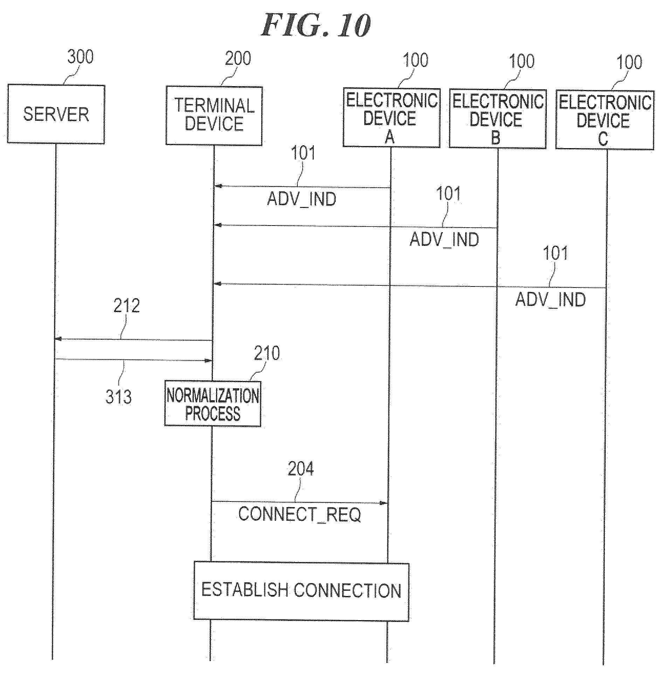

Fig. 10 is a sequence diagram illustrating an example of a process flow of the remote control system according to the second embodiment of the present invention.

The electronic devices A, B, and C (100) broadcast the signal 101 (ADV_IND) at predetermined intervals, and thereby notify that the electronic devices A, B, and C (100) wait for connection from the terminal device 200. The terminal device 200 measures the received signal strengths P of the signals 101, and requests the server 300 to acquire the reference strengths Pr corresponding to the electronic devices 100 that transmit the signals (212). In response to the request from the terminal device 200, the server 300 supplies the reference strengths Pr to the terminal device 200 (313). The terminal device 200 performs the normalization process 210 for the measured received signal strengths P in accordance with the reference strengths Pr supplied from the server 300.

The terminal device 200 selects the electronic device A whose normalized received signal strength Pn is the maximum as the electronic device 100 present at the nearest location, and sends the connection request signal 204 (CONNECT_REQ). Thus, a connection is established between the terminal device 200 and the electronic device A to establish a pairing.

As described above, according to the second embodiment of the present invention, the received signal strength of the signal, which is transmitted from the electronic device 100 and received at the terminal device 200, is normalized in accordance with the reference strength Pr supplied from the server 300. Thus, the electronic device 100 present at the nearest location can be accurately grasped for establishing a pairing.

3. Third Embodiment

In the foregoing second embodiment, it is assumed that the server 300 supplies the reference strength Pr in response to each request. However, the terminal device 200 may store the reference strength Pr. For example, such a configuration may be adopted in which a database body of the reference strength Pr is stored in the server 300 and a part of the database is temporarily cached on the terminal device 200. Moreover, such a configuration may be formed in which the entire database of the reference strength Pr is stored in the terminal device 200 for preventing access to the server 300. In the following, an example in which the reference strength Pr is stored in the terminal device 200 will be described as a third embodiment.

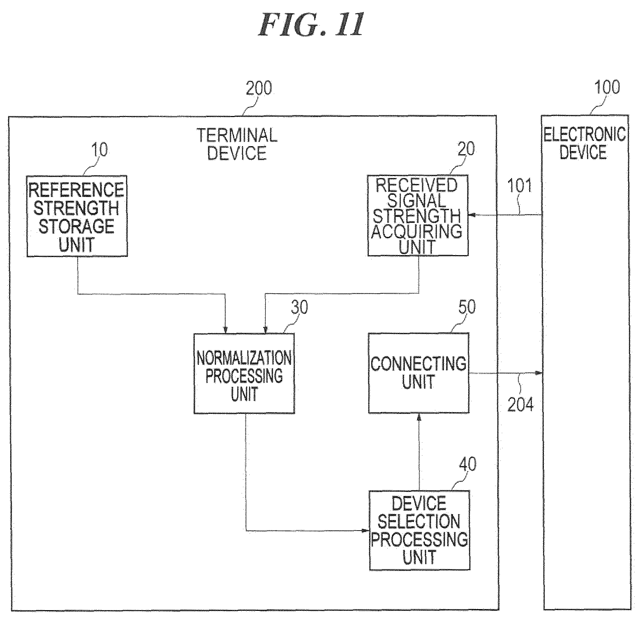

Fig. 11 is a diagram illustrating an exemplary functional configuration of a remote control system according to the third embodiment of the present invention. It is noted that because the overall structure of the remote control system is similar to the remote control system according to the foregoing first embodiment, the description is omitted. However, in the case where the entire database of the reference strength Pr is stored in the terminal device 200, the server 300 itself may be omitted.

In the foregoing second embodiment, it is assumed that the server 300 is requested to acquire the reference strength Pr, whereas in the third embodiment, it is assumed that the terminal device 200 stores the reference strength Pr. To this end, the terminal device 200 includes the functions of the reference strength storage unit 10. Therefore, in measuring the received signal strength P at the received signal strength acquiring unit 20, the terminal device 200 reads a corresponding reference strength Pr from the reference strength storage unit 10, and performs the normalization process at the normalization processing unit 30. The details of the normalization process are similar to the process in the foregoing first or second embodiment; a value obtained by subtracting the reference strength Pr from the received signal strength P is found as the normalized received signal strength Pn. Processes after the normalization process are also similar to the processes in the foregoing first or second embodiment.

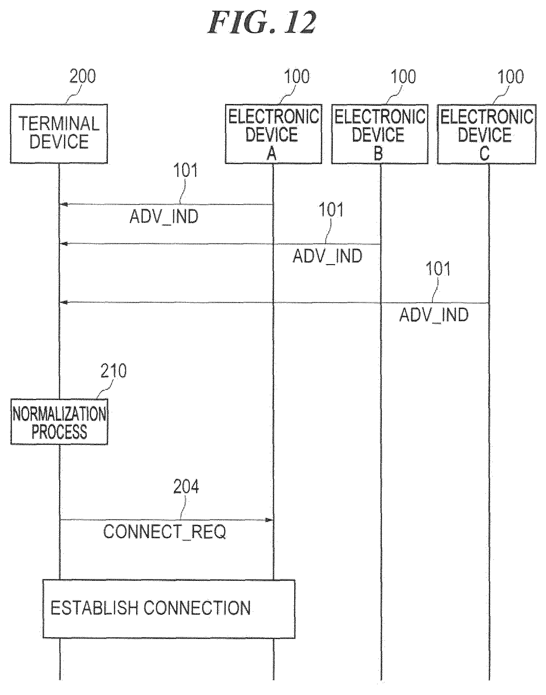

Fig. 12 is a sequence diagram illustrating an example of a process flow of the remote control system according to the third embodiment of the present invention

The electronic devices A, B, and C (100) broadcast the signal 101 (ADV_IND) at predetermined intervals, and thereby notify that the electronic devices A, B, and C (100) wait for connection from the terminal device 200. The terminal device 200 measures the received signal strengths P of the signals 101, and reads the reference strengths Pr corresponding to the electronic devices 100, which transmit the signals, from the reference strength storage unit 10. The terminal device 200 then performs the normalization process 210 for the measured received signal strengths P in accordance with the read reference strengths Pr.

The terminal device 200 selects the electronic device A whose normalized received signal strength Pn is the maximum as the electronic device 100 present at the nearest location, and sends the connection request signal 204 (CONNECT_REQ). Thus, a connection is established between the terminal device 200 and the electronic device A to establish a pairing.

As described above, according to the third embodiment of the present invention, the received signal strength of the signal, which is transmitted from the electronic device 100 and received at the terminal device 200, is normalized in accordance with the reference strength Pr stored in advance. Thus, the electronic device 100 present at the nearest location can be accurately grasped for establishing a pairing.

4. Exemplary Modifications

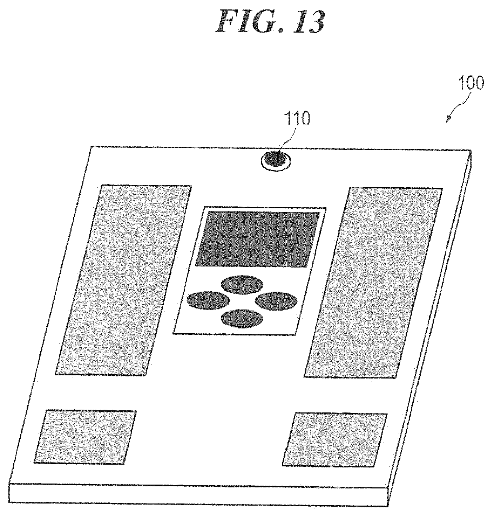

In the foregoing embodiments, the electronic device 100 that is selected at the terminal device 200 for establishing a pairing desirably includes an indicating unit that indicates the state of the pairing being established. For example, as illustrated in an example in Fig. 13, an indicating unit 110 is installed on the top face of a weight scale, and it indicates that the pairing with the terminal device 200 is established. This makes a user easily grasp the pairing state.

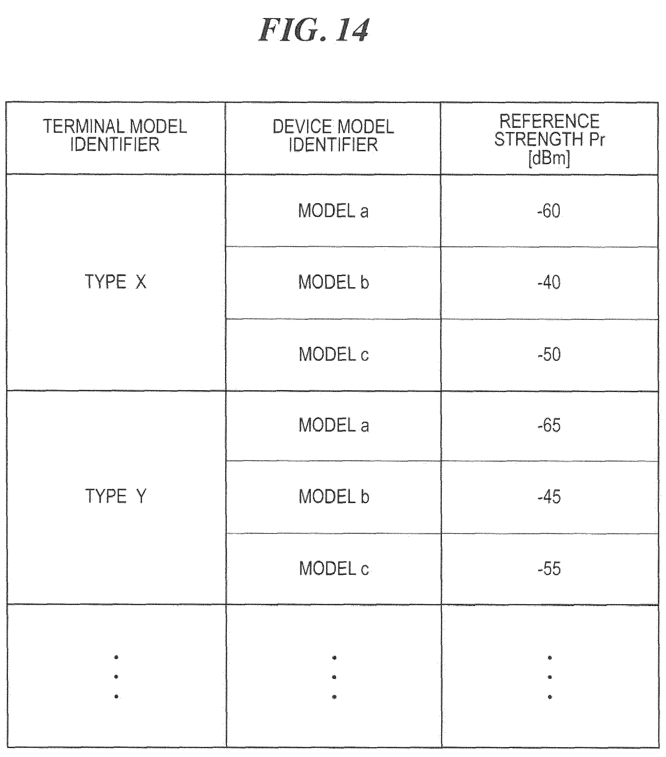

Moreover, in the foregoing embodiments, the reference strength Pr is stored in one-to-one correspondence with the device model identifier in the reference strength storage unit 10. However, such a configuration may be possible in which the reference strength Pr is provided to each of the models of the terminal device 200. For example, as illustrated in an example in Fig. 14, a terminal model identifier, the device model identifier, and the reference strength Pr may be stored in association with one another. Here, the terminal model identifier is an identifier for each of the models of the terminal device 200. Thus, suitable reference strengths Pr can be prepared with no influence of differences in the received sensitivity of each of the models of the terminal device 200.

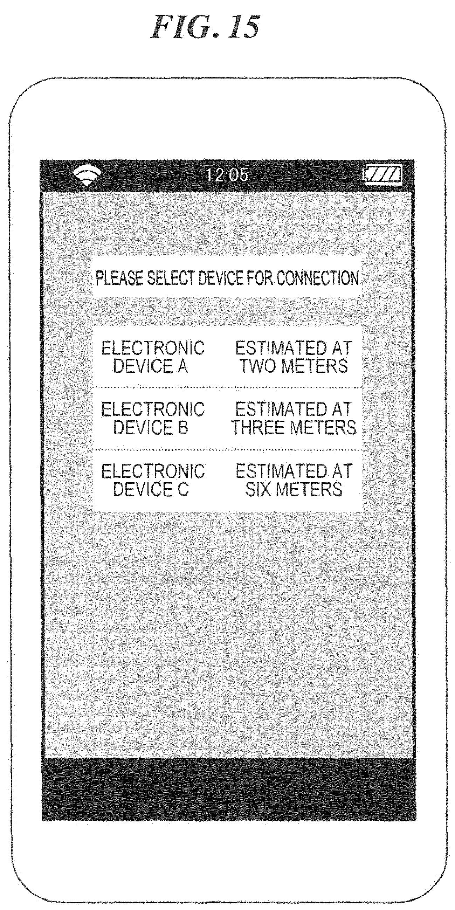

Furthermore, in the foregoing embodiments, it is assumed that an electronic device whose normalized received sensitivity is the maximum is automatically selected at the device selection processing unit 40. However, the present invention is not limited to automatic selection. For example, as illustrated in Fig. 15, a user may be encouraged to make a selection of an electronic device through a display of a list of the electronic devices 100 arranged in order of greater normalized received sensitivity on the screen of the terminal device 200. After the user makes a selection input to select one of the electronic devices, the device selection processing unit 40 selects the electronic device to be a target for connection according to the selection input. Thus, a pairing can be established in accordance with a user operation with reference to the normalized received sensitivity. It is noted that in this case, estimated distances may be displayed in accordance with the foregoing received signal strength models.

It is noted that the foregoing embodiments are examples for embodying the present invention. The matters in the embodiments are in correspondence with the specific matters of the invention in claims. Similarly, the specific matters of the invention in claims are in correspondence with the matters designated the same names in the embodiments. However, the present invention is not limited to the embodiments, and can be embodied by variously modifying the embodiments within the scope not deviating from the gist.

Moreover, the process procedures described in the foregoing embodiments can be perceived as a method having a series of these procedures. Furthermore, the process procedures described in the foregoing embodiments can be perceived as a program to cause a computer to execute a series of these procedures or as a recording medium on which the program is stored. For this recording medium, a compact disc (CD), minidisc (MD), digital versatile disc (DVD), memory card, Blu-ray (registered trademark) disc, and other media can be used, for example.

Reference Signs List

| | |
|---|---|
| 10 | Reference strength storage unit, |
| 20 | Received signal strength acquiring unit, |
| 30 | Normalization processing unit, |
| 40 | Device selection processing unit, |
| 50 | Connecting unit, |
| 100 | Electronic device, |
| 110 | Indicating unit, |
| 200 | Terminal device, |
| 300 | Server. |

**Claims**

1. A terminal device comprising:

a received signal strength acquiring unit that receives a signal transmitted from a plurality of electronic devices and acquires an electric field strength of the received signal;
a device selection processing unit that selects an electronic device to be a target for connection from the plurality of electronic devices in accordance with a normalized electric field strength that is a value obtained by normalizing the electric field strength of the received signal using a parameter corresponding to and unique to an electronic device that transmits the received signal; and

a connecting unit that establishes a connection with the electronic device selected at the device selection processing unit.

2. The terminal device according to claim 1,
wherein the device selection processing unit selects an electronic device where the normalized electric field strength is the maximum as the target for connection.

3. The terminal device according to claim 1,
wherein the device selection processing unit displays a list of the plurality of electronic devices in accordance with the normalized electric field strength and encourages making a selection input to select an electronic device, and after the selection input is made, the device selection processing unit selects the electronic device to be the target for connection in accordance with the selection input.

4. The terminal device according to claim 1,
wherein the parameter is an electric field strength of a received signal when a signal transmitted from an electronic device corresponding to the parameter is received at a location a predetermined distance apart from the electronic device.

5. The terminal device according to claim 1,
wherein: the received signal strength acquiring unit acquires the electric field strength of the received signal as a first received signal strength indicator (RSSI) value;
the parameter is a second RSSI value when a signal transmitted from an electronic device corresponding to the parameter is received at a location a predetermined distance apart from the electronic device; and
the normalized electric field strength is a value obtained by subtracting the second RSSI value from the first RSSI value.

6. The terminal device according to claim 1,
wherein at least one of the plurality of electronic devices is a weight scale.

7. The terminal device according to claim 1,
wherein at least one of the plurality of electronic devices is a sphygmomanometer.

8. The terminal device according to claim 1,
wherein at least one of the plurality of electronic devices includes an indicating unit that indicates that the connecting unit establishes a connection.

9. The terminal device according to claim 1, further comprising
a normalization processing unit that obtains the normalized electric field strength by normalizing the electric field strength of the received signal.

10. The terminal device according to claim 9, further comprising
a parameter storage unit that stores the parameter in association with the plurality of electronic devices.

11. A remote control system comprising:

the terminal device according to claim 1;
the plurality of electronic devices; and
a server that stores the parameter in association with the plurality of electronic devices and obtains the normalized electric field strength by normalizing the electric field strength of the received signal,
wherein: the received signal strength acquiring unit supplies the electric field strength of the received signal to the server; and
the server normalizes the electric field strength of the received signal supplied from the received signal strength acquiring unit and supplies the normalized electric field strength to the device selection processing unit.

12. A remote control system comprising:

the terminal device according to claim 9;
the plurality of electronic devices; and

a server that stores the parameter in association with the plurality of electronic devices,
wherein the server supplies, to the normalization processing unit, the parameter corresponding to an electronic device that transmits the received signal.

13. A remote control target determination method comprising:

a received signal strength acquiring step of receiving a signal transmitted from a plurality of electronic devices to acquire an electric field strength of the received signal;
a device selection processing step of selecting an electronic device to be a target for connection from the plurality of electronic devices in accordance with a normalized electric field strength that is a value obtained by normalizing the electric field strength of the received signal using a parameter corresponding to and unique to an electronic device that transmits the received signal; and
a connecting step of establishing a connection with the electronic device selected in the device selection processing step.

14. The remote control target determination method according to claim 13,
wherein in the device selection processing step, an electronic device where the normalized electric field strength is the maximum is selected as the target for connection.

15. The remote control target determination method according to claim 13,
wherein: in the received signal strength acquiring step, the electric field strength of the received signal is acquired as a first received signal strength indicator (RSSI) value;
the parameter is a second RSSI value when a signal transmitted from an electronic device corresponding to the parameter is received at a location a predetermined distance apart from the electronic device; and
the normalized electric field strength is a value obtained by subtracting the second RSSI value from the first RSSI value.

# FIG. 1

# FIG. 2

# FIG. 3

| DEVICE MODEL IDENTIFIER | REFERENCE STRENGTH Pr [dBm] |
|---|---|
| MODEL a | -60 |
| MODEL b | -40 |
| MODEL c | -50 |
| ⋮ | ⋮ |

# FIG. 4

# FIG. 5

```
         ┌─────────────────┐
         │      START       │
         └─────────────────┘
                  │
    ┌──────────────────────────┐
    │   ACQUIRE RECEIVED        │─── S911
    │   SIGNAL STRENGTH         │
    └──────────────────────────┘
                  │
    ┌──────────────────────────┐
    │   REQUEST NORMALIZATION   │─── S913
    └──────────────────────────┘
                  │
    ┌──────────────────────────┐
    │      SELECT DEVICE        │─── S914
    └──────────────────────────┘
                  │
    ┌──────────────────────────┐
    │   ESTABLISH CONNECTION    │─── S915
    └──────────────────────────┘
                  │
         ┌─────────────────┐
         │       END        │
         └─────────────────┘
```

# FIG. 6

| PREAMBLE | ACCESS ADDRESS | PDU | CRC |
|---|---|---|---|

| HEADER | PAYLOAD |
|---|---|

| PDU TYPE | | PAYLOAD LENGTH | |
|---|---|---|---|

0000　：ADV_IND

0101　：CONNECT_REQ

# FIG. 7

# *FIG. 8*

# FIG. 9

```
                    START

          ACQUIRE RECEIVED          S921
          SIGNAL STRENGTH

          ACQUIRE REFERENCE         S922
             STRENGTH

        NORMALIZATION PROCESS       S923

           SELECT DEVICE            S924

        ESTABLISH CONNECTION        S925

                     END
```

# FIG. 10

## FIG. 11

# FIG. 12

# FIG. 13

# FIG. 14

| TERMINAL MODEL IDENTIFIER | DEVICE MODEL IDENTIFIER | REFERENCE STRENGTH Pr [dBm] |
|---|---|---|
| TYPE X | MODEL a | -60 |
| | MODEL b | -40 |
| | MODEL c | -50 |
| TYPE Y | MODEL a | -65 |
| | MODEL b | -45 |
| | MODEL c | -55 |
| ⋮ | ⋮ | ⋮ |

# FIG. 15

PLEASE SELECT DEVICE FOR CONNECTION

| | |
|---|---|
| ELECTRONIC DEVICE A | ESTIMATED AT TWO METERS |
| ELECTRONIC DEVICE B | ESTIMATED AT THREE METERS |
| ELECTRONIC DEVICE C | ESTIMATED AT SIX METERS |

**INTERNATIONAL SEARCH REPORT**

| International application No. |
| --- |
| PCT/JP2014/061526 |

A. CLASSIFICATION OF SUBJECT MATTER
*H04M11/00*(2006.01)i, *H04Q9/00*(2006.01)i

According to International Patent Classification (IPC) or to both national classification and IPC

B. FIELDS SEARCHED

Minimum documentation searched (classification system followed by classification symbols)
H04M11/00, H04Q9/00

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-259466 A  (Funai Electric Co., Ltd.), 12 September 2003 (12.09.2003), paragraphs [0003] to [0004], [0008] to [0020] (Family: none) | 1-15 |
| Y | JP 2009-065394 A  (Meiji University), 26 March 2009 (26.03.2009), paragraphs [0005] to [0009], [0035] (Family: none) | 1-15 |
| Y | WO 2013/065225 A1  (Panasonic Corp.), 10 May 2013 (10.05.2013), paragraphs [0045] to [0049] (Family: none) | 1-15 |

[X]   Further documents are listed in the continuation of Box C.          [ ]   See patent family annex.

| | |
| --- | --- |
| * Special categories of cited documents: "A" document defining the general state of the art which is not considered    to be of particular relevance "E" earlier application or patent but published on or after the international filing date "L" document which may throw doubts on priority claim(s) or which is cited to establish the publication date of another citation or other special reason (as specified) "O" document referring to an oral disclosure, use, exhibition or other means "P" document published prior to the international filing date but later than the priority date claimed | "T" later document published after the international filing date or priority date and not in conflict with the application but cited to understand the principle or theory underlying the invention "X" document of particular relevance; the claimed invention cannot be considered novel or cannot be considered to involve an inventive step when the document is taken alone "Y" document of particular relevance; the claimed invention cannot be considered to involve an inventive step when the document is combined with one or more other such documents, such combination being obvious to a person skilled in the art "&" document member of the same patent family |

| Date of the actual completion of the international search 17 July, 2014 (17.07.14) | Date of mailing of the international search report 29 July, 2014 (29.07.14) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/061526

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-111975 A  (Panasonic Corp.), 21 May 2009 (21.05.2009), paragraphs [0035] to [0040] & US 2009/0097641 A1 | 6-7 |
| A | JP 2008-027304 A  (Amu Inc.), 07 February 2008 (07.02.2008), paragraph [0004] (Family: none) | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008205780 A

- JP 2008131532 A